(19) Europäisches Patentamt
European Patent Office
Office européen des brevets

(11) Publication number: **0 362 387 A1**

(12) **EUROPEAN PATENT APPLICATION published in accordance with Art. 158(3) EPC**

(21) Application number: **89900117.6**

(22) Date of filing: **01.12.88**

(86) International application number: **PCT/JP88/01216**

(87) International publication number: **WO 89/05478 (15.06.89 89/13)**

(51) Int. Cl.[5]: **G03C 1/84 , G03C 1/14**

(30) Priority: **04.12.87 JP 308393/87**

(43) Date of publication of application: **11.04.90 Bulletin 90/15**

(84) Designated Contracting States: **DE FR GB IT NL**

(71) Applicant: **KONICA CORPORATION**
**No. 26-2, Nishishinjuku 1-chome Shinjuku-ku**
**Tokyo(JP)**

(72) Inventor: **KAGAWA, Nobuaki**
**Konica Corporation 1 Sakura-machi**
**Hino-shi Tokyo 191(JP)**
Inventor: **KAWASHIMA, Yasuhiko**
**Konica Corporation 1 Sakura-machi**
**Hino-shi Tokyo 191(JP)**

(74) Representative: **Brock, Peter William et al**
**URQUHART-DYKES & LORD 91 Wimpole Street**
**London W1M 8AH(GB)**

# (54) SILVER HALIDE PHOTOGRAPHIC MATERIAL.

(57) A silver halide photographic material which comprises a support having provided thereon a hydrophilic colloidal layer containing at least one cyanine dye represented by general formula (I), wherein $Y^1$ and $Y^2$ each represents a chalcogen atom, -CH = CH- or $>$N-$R^3$, $Z^1$ and $Z^2$ each represents a group of non-metallic atoms necessary for forming a fused benzo or naphto ring directly substituted by at least one sulfo group, $R^1$ and $R^2$ each represents a hydrocarbon group substituted by an acid group, $R^3$ represents an alkyl group or an aryl group, $L^1$, $L^2$, $L^3$, $L^4$, $L^5$, $L^6$ and $L^7$ each represents a methine group, and $\ell^1$, $\ell^2$, $m^1$, $m^2$ and $m^3$ each represents 0 or 1.

EP 0 362 387 A1

# LIGHT-SENSITIVE SILVER HALIDE PHOTOGRAPHIC MATERIAL

## TECHNICAL FIELD

The present invention relates to a light-sensitive silver halide photographic material containing a cyanine dye. More particularly, it relates to a light-sensitive silver halide photographic material in which a certain specific cyanine dye has been contained to have good spectral characteristics and also cause no difficulties ascribable to the dye.

## BACKGROUND ART

In light-sensitive silver halide photographic materials (hereinafter abridged as "light-sensitive material(s)"), dyes are well known to be incorporated in the light-sensitive materials so that specific wavelengths can be absorbed for the purpose of filtering light, preventing halation, preventing irradiation or controlling the speed of photographic emulsions. Hydrophilic colloidal solutions, for example, are usually colored with dyes.

The dyes are incorporated in, for example, a filter

layer, an anti-halation layer and an emulsion layer of photographic component layers. Of these, the filter layer is usually positioned at an upper layer of a light-sensitive emulsion layer or between emulsion layers, and serves to adjust the incident light reaching the emulsion layer to the light having desirable spectral composition. For the purpose of improving the sharpness of a photographic image, the anti-halation layer is also commonly provided between an emulsion layer and a support or at the back surface of a support so that any detrimental reflected light at the boundary between the emulsion layer and support or at the back surface of the support may be absorbed to prevent halation. The emulsion layer is also usually colored so that any detrimental reflected light or scattered light caused by silver halide grains may be absorbed to prevent irradiation.

The dyes used for such purposes are required as a matter of course to have good absorption spectral characteristics that may accord with the purposes for which they are used. In addition, they must meet the various conditions that the dyes are completely decolored in the course of the photographic development processing and readily dissolved away from light-sensitive materials so that no aftercolor stain may be caused by the dyes after the development processing, they do not adversely

affect photographic emulsions to cause fog, desensitization or the like, they do not diffuse from dyed layers to other layers, and they have so good stability with time in solutions or light-sensitive materials as to cause no color change or fading. Moreover, recent progress in light sources has brought with it demands for the dyes that can absorb light in the range of from the short wavelength side to the longer wavelength side than the conventional.

Up to the present, many efforts have been made so as to find out dyes that can satisfy the above conditions and a number of dyes have been proposed. For example, they include oxonol dyes as disclosed in British Patents No. 506,385 and No. 1,278,621, U.S. Patents No. 2,533,472 and No. 3,247,127, Japanese Patent Examined Publications No. 22069/1964 and No. 13168/1968, and Japanese Patent Publication Open to Public Inspection (hereinafter referred to as Japanese Patent O.P.I. Publication) No. 34716/1977, styryl dyes as typified by those disclosed in U.S. Patent No. 1,845,404, cyanine dyes as typified by those disclosed in U.S. Patent No. 2,843,486, and merocyanine dyes as disclosed in U.S. Patents No. 2,493,747, No. 3,148,187 and No. 3,282,699, Japanese Patent O.P.I. Publications No. 145124/1975, No. 134425/1977, No. 29727/1977 and No. 65426/1977. In actual

circumstances, however, there are available only a very few dyes good enough to be usable in light-sensitive materials with the satisfaction of all the above conditions.

In the field of photography, the cyanine dyes are also known, in general, as sensitizing dyes. In efficiently using the sensitizing dyes, there are various limitations on the sensitivity, the degree by which the dyes may remain in light-sensitive materials after development processing, and so forth, so that in the present state it is difficult to make appropriate selection. Thus, it has been sought to provide a sensitizing dye that can be used more efficiently.

An object of the present invention is to provide a light-sensitive material that satisfies the above conditions, namely, a light-sensitive material containing a dye which has good absorption spectral characteristics, can be decolored in the course of development processing and also dissolved away from the light-sensitive material so that only a very little aftercolor stain may be caused after the development processing, and is inert to photographic emulsions.

DISCLOSURE OF THE INVENTION

The above object of the present invention can be

achieved by a light-sensitive silver halide photographic material, comprising a hydrophilic colloid layer containing at least one of a cyanine dye represented by the following Formula (I).

Formula (I)

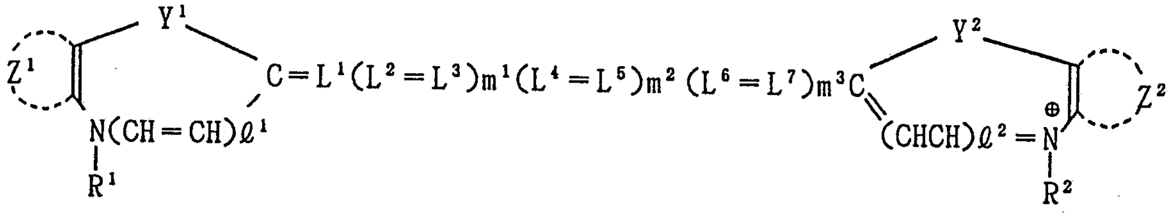

wherein $Y^1$ and $Y^2$ each represent a chalcogen atom, a -CH=CH- group or a >N-$R^3$ group; $Z^1$ and $Z^2$ each represent a group of non-metallic atoms necessary to complete a condensed benzene ring or condensed naphthalene ring directly substituted with at least one sulfo group; $R^1$ and $R^2$ each represent a hydrocarbon group substituted with an acidic group; $R^3$ represents an alkyl group or an aryl group; $L^1$, $L^2$, $L^3$, $L^4$, $L^5$, $L^6$ and $L^7$ each represent a methine group; and $\ell^1$, $\ell^2$, $m^1$, $m^2$ and $m^3$ each represent 0 or 1.

The present dye always forms an intramolecular salt.

## BEST MODE FOR WORKING THE INVENTION

In Formula (I), the chalcogen atom represented by $Y^1$

and $Y^2$ includes an oxygen atom, a sulfur atom, a selenium atom and a tellurium atom.

The sulfo group substituted on $Z^1$ and/or $Z^2$ may be free or may form a salt. The salt to be formed includes a salt of an alkali metal such as lithium, sodium or potassium, a salt of an alkaline earth metal such as magnesium or calcium, and an ammonium salt or an organic salt such as a triethylammonium salt, a pyridinium salt or a triethanolammonium salt.

The hydrocarbon group represented by $R^1$ and $R^2$, substituted with an acidic group, preferably includes an alkyl group and an aryl group. The alkyl group may be straight-chain or branched, and may further include those having a substitutent. It specifically includes a carboxymethyl group, a sulfoethyl group, a 3-sulfobutyl group, a 2-sulfatoethoxyethyl group, a 2-carboxyethyl group, a 3-phosphonopropyl group, a 3-sulfo-2-hydroxypropyl group, a 3-sulfatopropyl group, a 2-sulfobenzyl group and a 4-sulfophenethyl group. The aryl group includes, for example, a 4-sulfophenyl group, a 4-carboxyphenyl group, a 4-carboxy-3-sulfamoylphenyl group and a 4-sulfatophenyl group.

The alkyl group represented by $R^3$ may also have a substituent. It includes, for example, an ethyl group, an

aryl group, a 2,2,3,3-tetrafluoropropyl group, an i-butyl group, a hydroxyethyl group and a phenethyl group. The aryl group preferably includes a substituted or unsubstituted phenyl group, including, for example, a phenyl group and a p-tolyl group.

The methine group represented by $L^1$, $L^2$, $L^3$, $L^4$, $L^5$, $L^6$ and $L^7$ may be substituted. For example, the substituent therefor includes a lower alkyl group having 1 to 6 carbon atoms as exemplified by a methyl group, an ethyl group, a propyl group or an i-butyl group; an aryl group as exemplified by a phenyl group, a p-tolyl group or a p-chlorophenyl group; an alkoxy group having 1 to 4 carbon atoms as exemplified by a methoxy group or an ethoxy group; an aryloxy group as exemplified by a phenoxy group; an aralkyl group as exemplified by a benzyl group or a phenethyl group, a heterocyclic ring as exemplified by a thienyl group or a furyl group; a substituted amino group as exemplified by a dimethylamino group, a tetramethyleneamino group or an anilino group; and an alkylthio group as exemplified by a methylthio group. It is also possible to combine $L^2$ with $L^4$ or $L^4$ with $L^6$ to form a carbon ring of 5 or 6 members.

Typical examples of the cyanine dye represented by the above Formula (1) (hereinafter abridged as "the dye according to the present invention" or so) are shown

below, but the present invention is by no means limited by these.

(1)

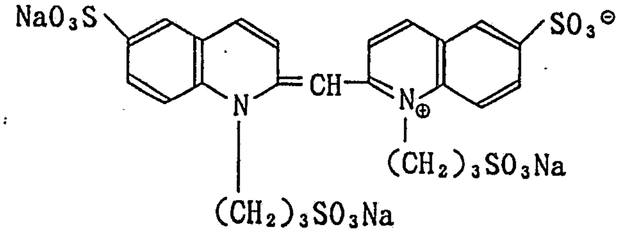

(2)

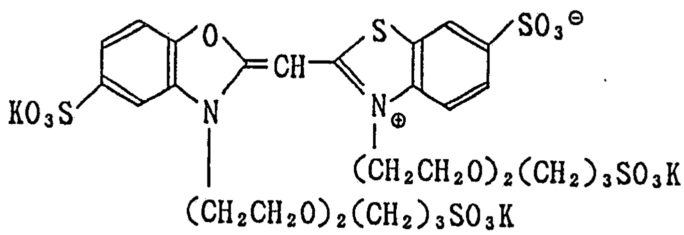

(3)

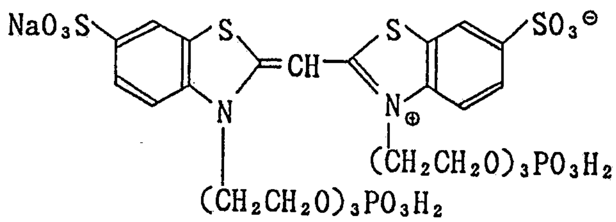

(4)

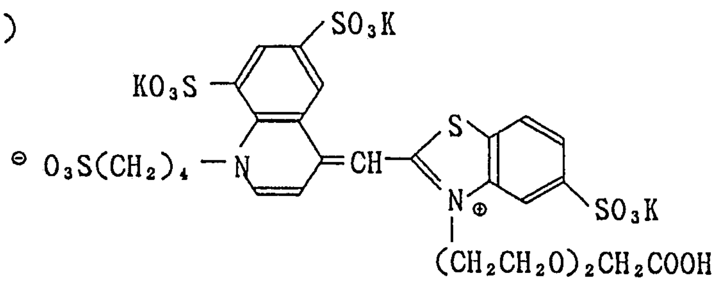

(5)

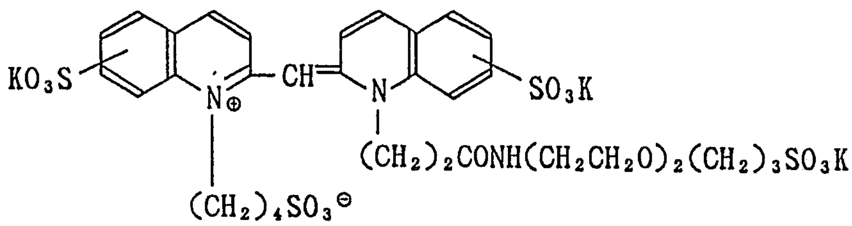

(6)

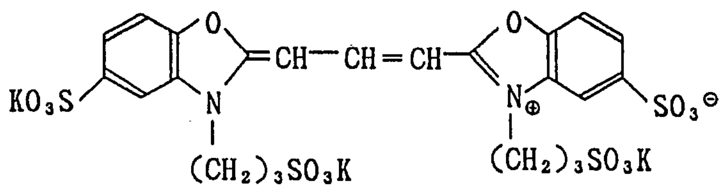

(7)

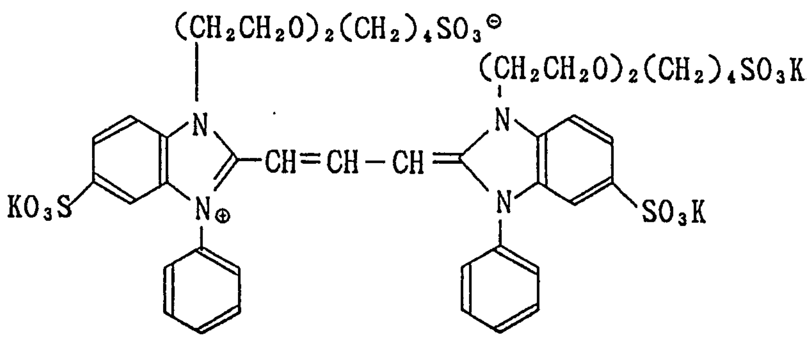

(8)

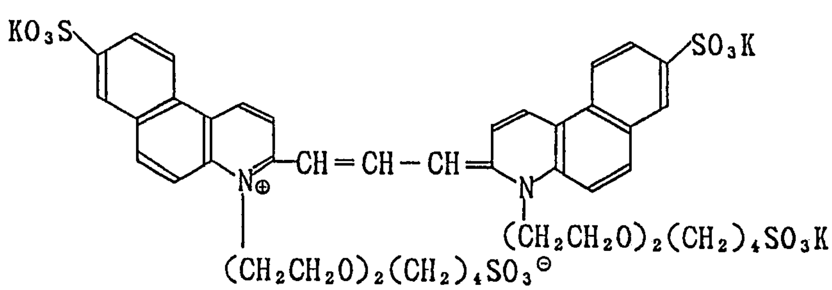

(9)

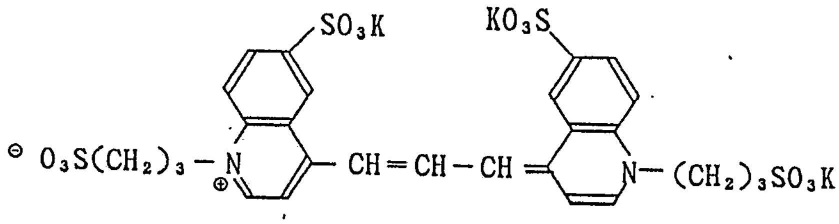

(10)

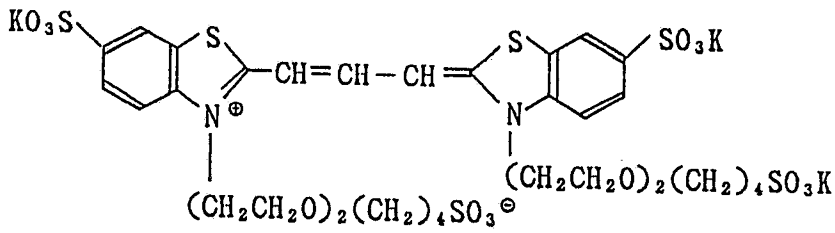

(11)

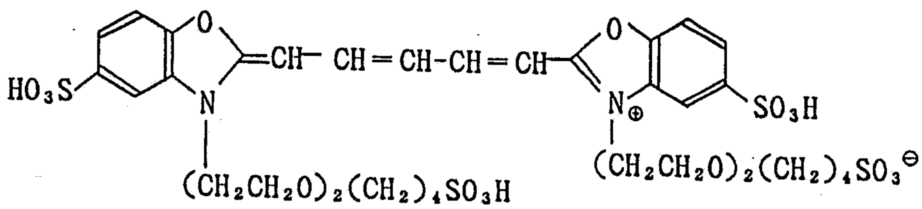

(12)

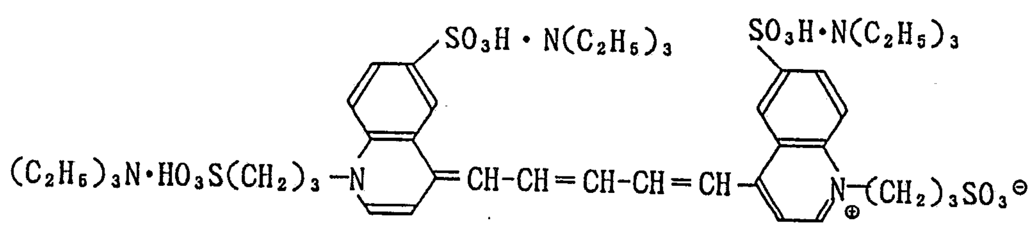

(13)

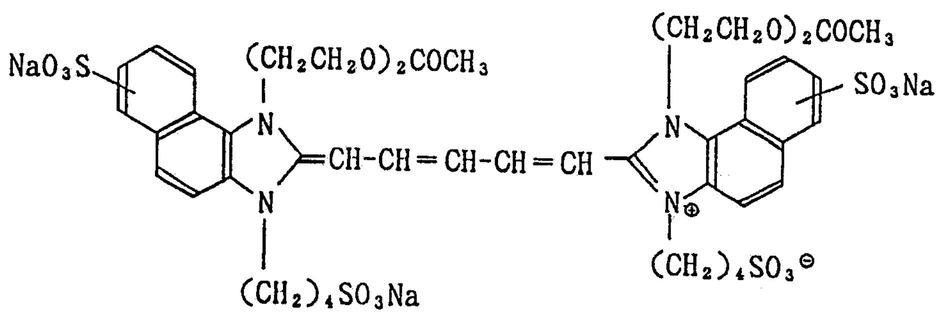

(14)

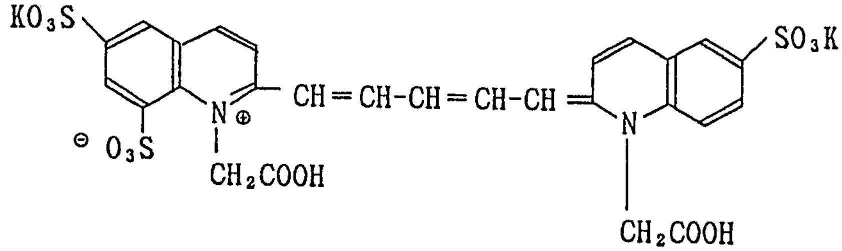

(15)

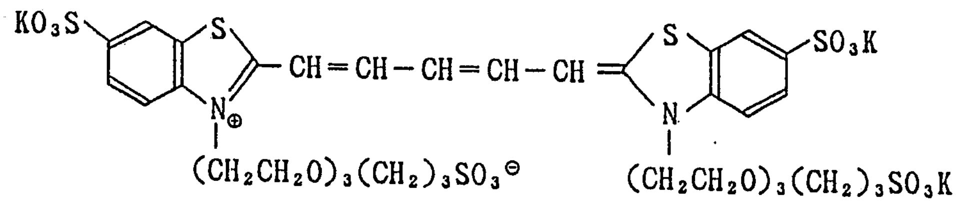

(16)

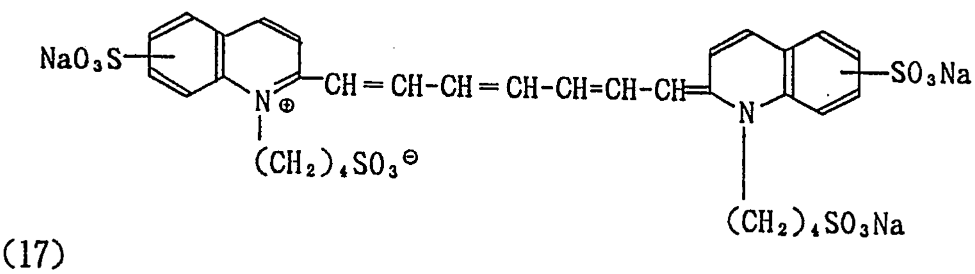

(17)

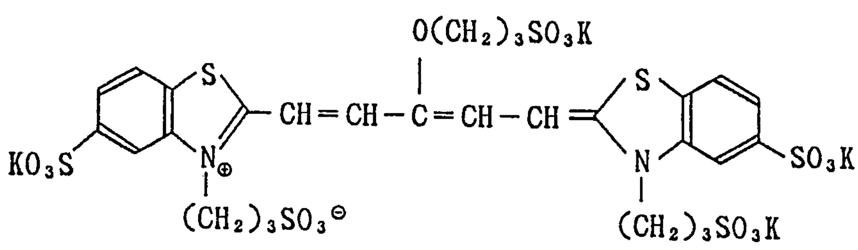

(18)

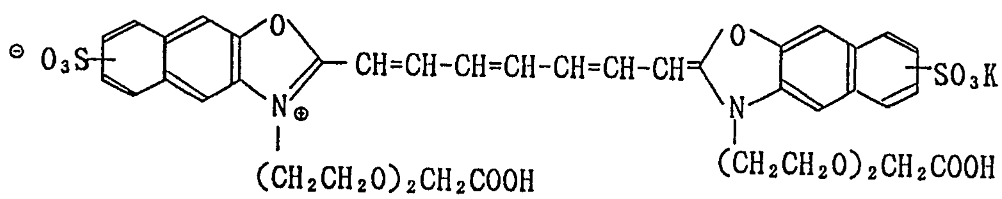

(19)

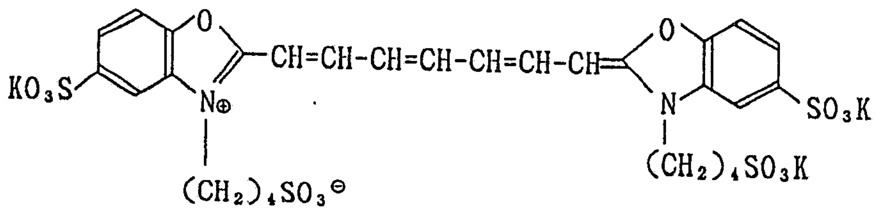

(20)

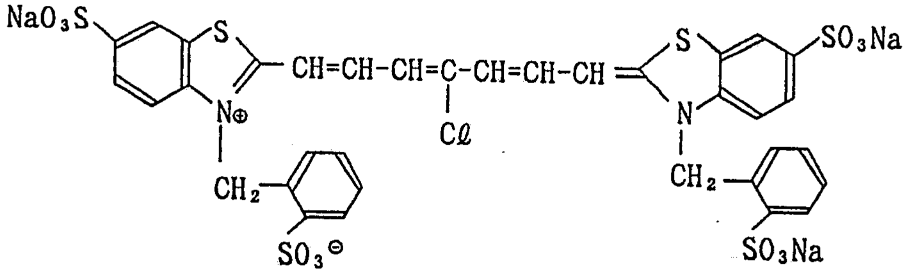

(21)

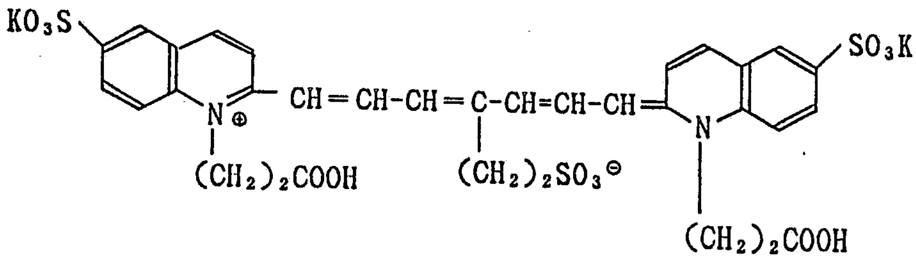

(22)

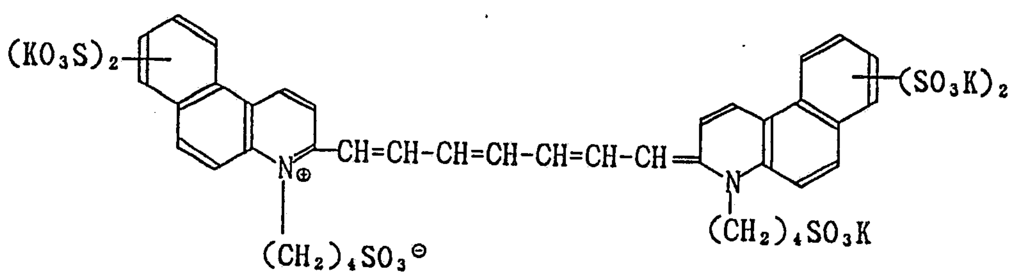

(23)

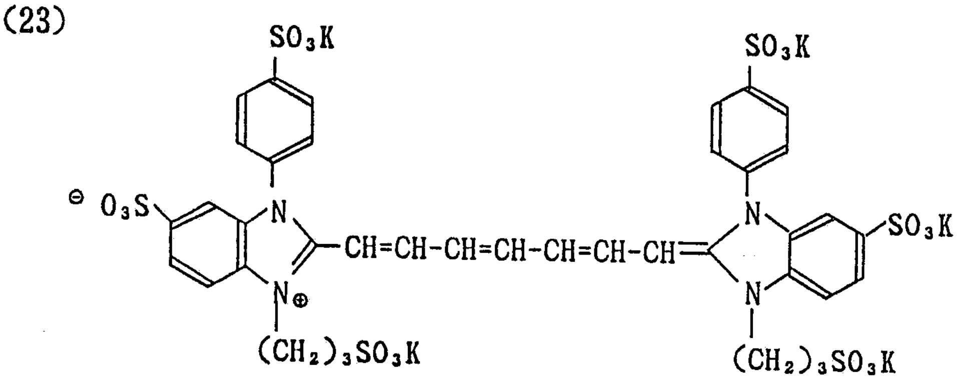

(24)

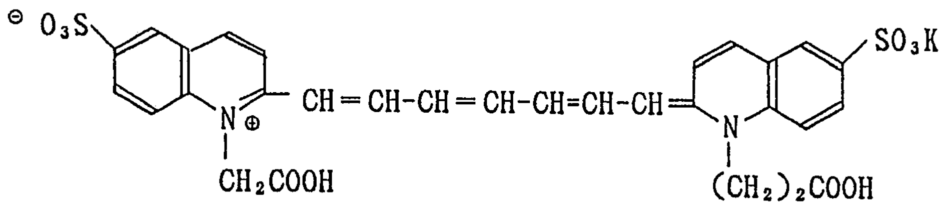

The cyanine dye of the present invention can be synthesized according to the method of synthesizing cyanine dyes, as described in F.M. Hamer, The Cyanine Dyes and Related Compounds, 1964, Interscience Publishers, and U.S. Patent No. 2,895,955.

The cyanine dye according to the present invention has large molar absorption coefficient and good absorption spectral characteristics, and have the property that they are completely decolored in light-sensitive materials in the course of the photographic development processing. Because of the large molar absorption coefficient, it is also possible to obtain a sufficient optical density only by adding a small amount of an aqueous solution of the dye of the present invention in a hydrophilic colloid layer coating solution. Thus, the dye can be incorporated in light-sensitive materials with ease.

The cyanine dye according to the present invention may be contained in any layers of a light-sensitive material in order for the effect thereof to be exhibited.

The dye may be contained in silver halide emulsion layers, or may be contained in other layers. In the case of a multi-layer structure, they may be contained in plural layers.

For example, in the light-sensitive material of the present invention, the cyanine dye represented by the above Formula (I) may be contained in a silver halide emulsion layer so that it can be used as an anti-irradiation dye, or may be contained in a non-light-sensitive hydrophilic colloid layer so that it can be used as a filter dye or an anti-halation dye. Depending on the purpose for which the dye is used, the dye may also be used in combination of two or more kinds, or may be used in combination with other dye(s). The dye according to the present invention can be readily incorporated in the silver halide emulsion layer or other hydrophilic colloid layers by using usual methods. In general, the dye can be incorporated in light-sensitive materials by dissolving the dye or an organic or inorganic alkali salt of the dye in water to make an aqueous solution of the dye with a suitable concentration, and adding the solution in a coating solution, followed by coating according to various methods, for example, a known coating method. The dye may be contained in the amount which may vary depending on the purpose for which it is used, but, in general, it may be

used by coating so as to give an amount of from 1 to 800 mg per 1 $m^2$ of the area on a light-sensitive material.

In instances in which the cyanine dye of Formula (I) according to the present invention is used as a spectral sensitizing dye, it may be used in the amount which may vary depending on the physical and chemical properties of a silver halide contained in the silver halide emulsion layer to which the dye is added, the type of the dye, and so forth, but, in general, it may be used in an amount ranging from 1 mg to 1,000 mg, preferably from 5 mg to 800 mg, and more preferably from 10 mg to 600 mg, per mol of silver halide.

In instances in which the cyanine dye of Formula (I) according to the present invention is used as the spectral sensitizing dye, there are no particular limitations on the time in which the dye is added in silver halide emulsion layers. It can be added at any time during which an emulsion is prepared, ranging from the formation of silver halide grains to the completion of chemical ripening, and at any time after the completion of chemical ripening and immediately before coating.

In working the present invention, other dye may also be further used in addition to the cyanine dye of Formula (I) according to the present invention. Usable as the dye to be used in combination are exemplified by

pyrazoloneoxonol dyes as disclosed in U.S. Patent No. 2,274,782, diarylazo dyes as disclosed in U.S. Patent No. 2,956,879, styryl dyes and butadienyl dyes as disclosed in U.S. Patents No. 3,423,207 and No. 3,384,487, merocyanine dyes as disclosed in U.S. Patent No. 2,527,583, merocyanine dyes and oxonol dyes as disclosed in U.S. Patents No. 3,486,897, No. 3,652,284 and No. 3,718,472, enamine hemioxonol dyes as disclosed in U.S. Patent No. 3,976,661, and dyes as disclosed in British Patents No. 584,609 and No. 1,177,429, Japanese Patent O.P.I. Publications No. 85130/1973, No. 99620/1974 and No. 114420/1974, and U.S. Patents No. 2,533,472, No. 3,148,187, No. 3,177,078, No. 3,247,127, No. 3,540,887, No. 3,575,704 and 3,653,905.

The light-sensitive material of the present invention has at least one silver halide emulsion layer. There are no particular limitations on the silver halide emulsion used in the present invention, and any emulsions can be used.

As silver halides, any silver halides such as silver chloride, silver bromide, silver iodide, silver chlorobromide, silver iodobromide and silver chloroiodobromide can be used, which are used in usual light-sensitive materials.

In the present invention, a hydrophilic binder is

used for the formation of the hydrophilic colloid layer. It arbitrarily includes gelatin, gelatin derivatives, graft polymers of gelatin with other macromolecules, which are commonly used.

As a water-dispersible polymer contained in photographic component layers, there can be used aqueous dispersions of hydrophobic polymers or copolymers obtained from vinyl compounds, and aqueous dispersions of condensation polymerization polymers such as polyesters.

In working the present invention, there are no particular limitations on silver halides, chemical sensitizers, silver halide solvents, sensitizing dyes, antifoggants, protective colloids, ultraviolet absorbents, polymer latexes, brightening agents, color-forming couplers, anti-color-fading agents, matting agents, surface active agents, and so forth which are used in the silver halide emulsion layer or other layers of the light-sensitive material. For example, those described in Research Disclosure Vol. 176, pp.22-31 (December, 1978) can be used.

Reference can be made on the descriptions in the above Research Disclosure also in regard to supports of light-sensitive materials, processing methods, layer constitution of light-sensitive materials and so forth.

[Examples]

The present invention will be described below in a specific manner by giving Examples, but the present invention is by no means limited by these.

Example 1

In 35 mℓ of distilled water, 3.5 g of gelatin was added and dissolved, and 5 mℓ of water containing 2.0 x $10^{-4}$ mol of a dye according to the present invention or a comparative dye was added thereto. Further added in the resulting mixture were 1.25 mℓ of an aqueous 10 % saponin solution and 0.75 mℓ of a 1 % formalin solution, followed by addition of water to make up the total quantity to 50 mℓ. The resulting dye solution was applied on one side of a transparent polyethylene terephthalate base whose both sides have been subbing-treated with a latex (L-2), so as to give a gelatin content of 60 mg/100 $cm^2$, followed by drying to provide a backing layer (BC layer) colored with the dye.

Subsequently, in a silver chlorobromide emulsion (silver chloride content: 40 mol %) prepared by a double jet method and having an average grain size of 0.28 μm, 8 x $10^{-6}$ mol of sodium thiosulfate, 7 x $10^{-4}$ mol of ammonium thiocyanate and 8 x $10^{-7}$ mol of chloroaurate, per mol of silver halide, were added to carry out gold and sulfur sensitization. Thereafter, 2 x $10^{-3}$ mol of 4-hydroxy-6-methyl-1,3,3a,7-tetrazaindene was added, followed by

further addition of the additives shown below. The resulting solution with a gelatin concentration of 2.5 g/m$^2$ was applied on the side opposite to the BC layer, thus preparing Samples Nos. 1 to 19. They all had a silver weight of 40 mg/100 cm$^2$.

Latex (L-2)

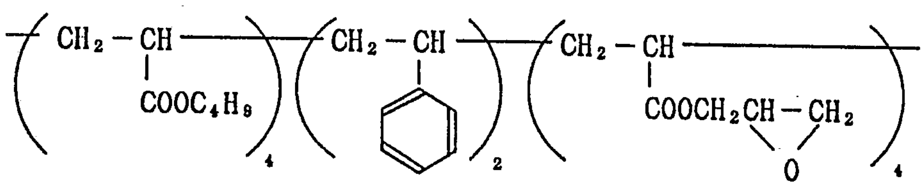

Surface active agent (D-1)

$CH_2COO(CH_2)_9CH_3$

$NaO_3S-CHCOO(CH_2)_2CH(CH_3)_2$ 8 mg/g gelatin

Hardening agent (H-1)

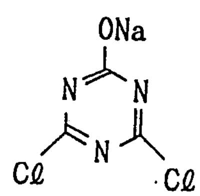

10 mg/g gelatin

Stabilizer (A-1)

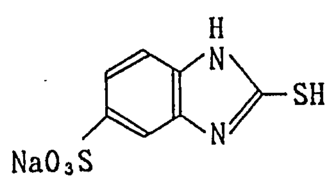

15 mg/mol AgX

Mildewproofing agent (FC-1)

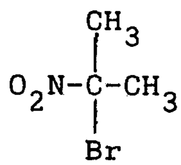

10 mg/mol AgX

Latex (L-1)

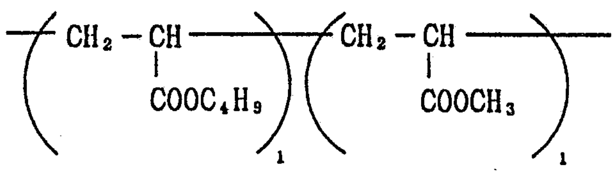

2.0 g/mol AgX

The samples prepared in this way were beforehand put together in such a manner that the emulsion layer side and the dye-colored BC layer side were brought into close contact for 24 hours under conditions of a relative humidity of 70 % and a temperature of 40°C. Thereafter the samples were peeled, and subjected to the following development processing, followed by measurement of spectra to evaluate the silver density (fog) and the aftercolor (the color that remains in the sample after the processing).

The aftercolor was evaluated by determining the decoloring rate on the basis of the absorbance at the absorption maximum wavelength of each sample before the

processing and after the processing.

$$\text{Decoloring rate} = \frac{E_1 - E_2}{E_1} \times 100\ (\%)$$

$E_1$ represents an absorbance observed before the development processing, and $E_2$, an absorbance observed after the development processing.

Processing steps

| | | |
|---|---|---|
| Developing | 32°C | 1 minute |
| Fixing | 25°C | 1 minute |
| Washing | 20°C | 30 seconds |
| Drying | | |

Developing solution

| | |
|---|---|
| Hydroquinone | 25 g |
| Potassium sulfite (anhydrous) | 30 g |
| Sodium ethylenediaminetetraacetate | 3 g |
| Potassium carbonate (anhydrous) | 40 g |
| Potassium bromide | 3 g |
| 5-Nitroindazole | 3 mg |
| Diethylene glycol | 40 g |
| Dye | |

(molecular weight) x (10/mol absorption coefficient) g

Made up to 1 liter by adding water.

Fixing solution

Sakura Fixer, Type-821, available from Konishiroku Photo

Industry Co., Ltd., containing (molecular weight) x (10/mol absorption coefficient) g of the dye.

Comparative dyes

( A )

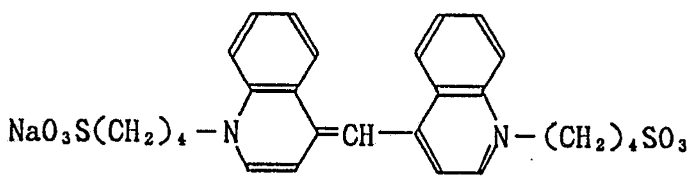

( B )

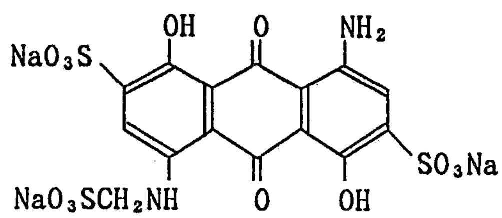

(C)

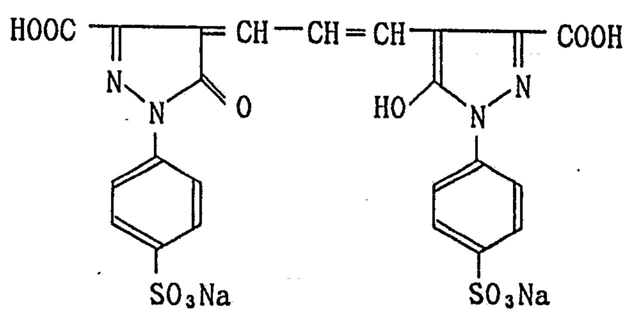

Results obtained are shown together in Table 1.

Table 1

| Sample No. | Dye | Fog | Decoloring rate (%) |
|---|---|---|---|
| 1 (Y) | Exemplary compound (1) | 0.02 | 98 |
| 2 (") | " (2) | 0.02 | 97 |
| 3 (") | " (3) | 0.02 | 96 |
| 4 (") | " (5) | 0.02 | 98 |
| 5 (") | " (6) | 0.02 | 98 |
| 6 (") | " (7) | 0.02 | 100 |
| 7 (") | " (8) | 0.02 | 98 |
| 8 (") | " (10) | 0.02 | 99 |
| 9 (") | " (11) | 0.02 | 98 |
| 10 (") | " (12) | 0.02 | 98 |
| 11 (") | " (14) | 0.02 | 99 |
| 12 (") | " (16) | 0.02 | 99 |
| 13 (") | " (17) | 0.02 | 97 |
| 14 (") | " (18) | 0.02 | 98 |
| 15 (") | " (22) | 0.02 | 100 |
| 16 (") | " (24) | 0.02 | 97 |
| 17 (X) | Comparative dye (A) | 0.04 | 85 |
| 18 (") | " (B) | 0.06 | 93 |
| 19 (") | " (C) | 0.02 | 92 |

X: Comparative Example, Y: Present Invention

As will be evident from Table 1, the samples of the present invention show very high values for the decoloring rate and thus the exemplary dyes according to the present invention were found to show superior decoloring properties to those of the comparative dyes. The photographic emulsion layers also are less adversely affected by the contact transfer.

Example 2

Color light-sensitive materials used for printing were prepared following the procedure (1) shown below. These samples were imagewise exposed to light, and thereafter subjected to the processing using the following color developing solution and beach-fixing solution, to carry out measurement on the performances regarding the respective dye images thus formed.

(1) Preparation of samples:

Pretreatment subbing with gelatin was applied on a paper support coated on its surface with polyethylene containing titanium oxide of an anatase type as a white pigment. Thereafter the following layers were successively provided by coating to prepare samples.

Layer 1: Blue-sensitive silver chlorobromide emulsion layer

Provided by coating with use of a silver chlorobromide emulsion containing 0.7 mol % of silver

bromide and comprising cubic crystals having a side length of 0.7 µm, and an emulsified dispersion prepared by dissolving the following yellow coupler (Y-1) and 2,5-di-t-octylhydroquinone in dioctylphthalate.

Layer 2: First intermediate layer

Provided by coating with use of an emulsified dispersion prepared by dissolving 2,5-di-t-octylhydroquinone in dioctylphthalate.

Layer 3: Green-sensitive silver chlorobromide emulsion layer

Provided by coating with use of a silver chlorobromide emulsion containing 0.5 mol % of silver bromide and comprising cubic crystals having a side length of 0.4 µm, and an emulsified dispersion prepared by dissolving the following magenta coupler (M-1) and 2,5-di-t-octylhydroquinone in dioctylphthalate, with further addition of an aqueous solution of a dye (D-1).

Layer 4: Second intermediate layer

Provided by coating with use of an emulsified dispersion prepared by dissolving the following ultraviolet absorbent (UV-1) and 2,5-di-t-octylhydroquinone in dioctylphthalate.

Layer 5: Red-sensitive silver chlorobromide emulsion layer

Provided by coating with use of a silver

chlorobromide emulsion containing 0.5 mol % of silver bromide and comprising cubic crystals having a side length of 0.4 μm, and an emulsified dispersion prepared by dissolving the following cyan coupler (C-1) and 2,5-di-t-octylhydroquinone in dioctylphthalate, with further addition of an aqueous solution of the dye as shown in Table 4 set out later.

Layer 6: Protective layer

Provided by coating with use of an emulsified dispersion prepared by dissolving the following ultraviolet absorbent (UV-1) and 2,5-di-t-octylhydroquinone in dioctylphthalate.

Layer 7: Protective layer

Provided by coating with use of an emulsified dispersion prepared by dissolving 2,5-di-t-octylhydroquinone in dioctylphthalate, with further addition of a hardening agent (H-2).

(Y－1)

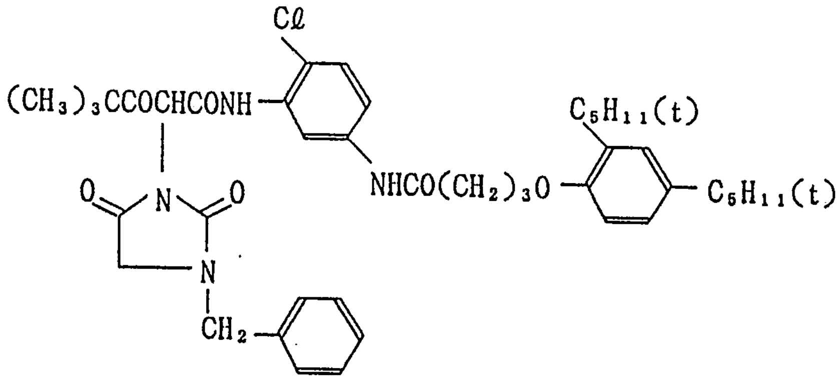

(M－1)

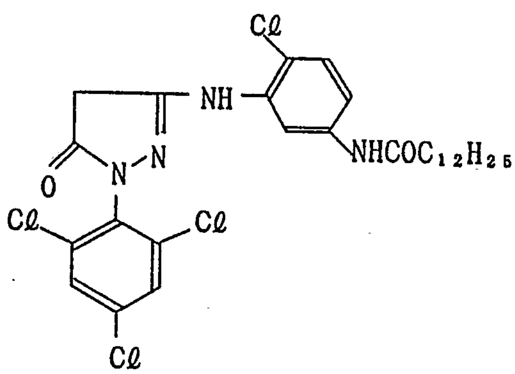

(C－1)

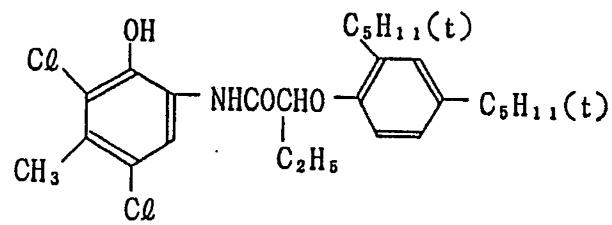

(H－2)

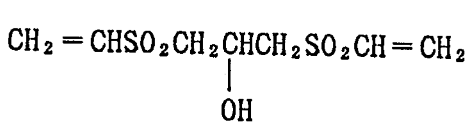

(UV－1)

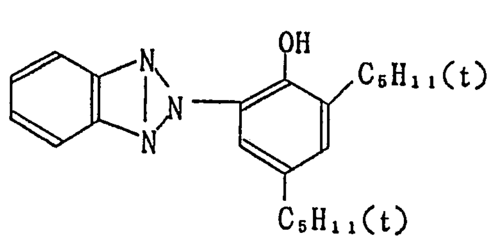

(D-1)

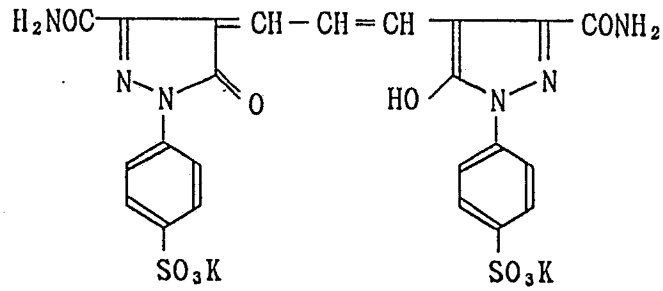

The amounts of the components in each layer (amounts in mg per 100 $cm^2$) are shown in Table 2.

Table 2

| Layer | Silver halide emulsion | Ultraviolet absorbent, Coupler | 2,5-di-t-OHQ* | Gelatin | DOP** | Dye |
|---|---|---|---|---|---|---|
| 1 | (Blue-sensitive silver chlorobromide emulsion) 3.9 mg in terms of silver weight | (Y-1) 8 mg | 0.2 mg | 12 mg | 5 mg | - |
| 2 | (Intermediate layer) | - | 0.4 mg | 5 mg | 1 mg | - |
| 3 | (Green-sensitive silver chlorobromide emulsion) 2.2 mg in terms of silver weight | (M-1) 6.2 mg | 0.16 mg | 12.5 mg | 3 mg | (D-1) 0.15 mg |
| 4 | (Intermediate layer) | - | 0.5 mg | 12 mg | 3 mg | - |
| 5 | (Red-sensitive silver chlorobromide emulsion) 2 mg in terms of silver weight | (C-1) 4.5 mg | 0.1 mg | 14 mg | 2.0 mg | Table 4 |
| 6 | (Protective layer) | (UV-1) 3 mg | 0.5 mg | 10 mg | 2.0 mg | - |
| 7 | (Protective layer) | - | 0.5 mg | 15 mg | 0.2 mg | - |

* Octylhydroquinone

** Dioctylphthalate

Each silver halide emulsion is subjected to gold and sulfur sensitization by adding therein sodium thiosulfate and chloroauric acid in optimum amounts and ripening it at 50°C for 100 minutes. A methanol solution of a spectral sensitizing dye (types and amounts for the addition are shown in Table 3) is added corresponding to each color sensitivity, and a methanol solution of a compound (E) having the following structure is added in an amount of $1.0 \times 10^{-3}$ mol/mol Ag.

(E)

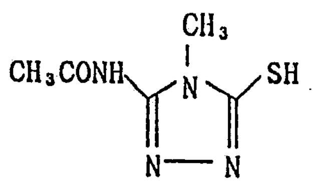

Table 3

| Emulsion layer | Sensitizing dye | Amount (mg/ molAg) |
|---|---|---|
| Blue-sensitive layer | 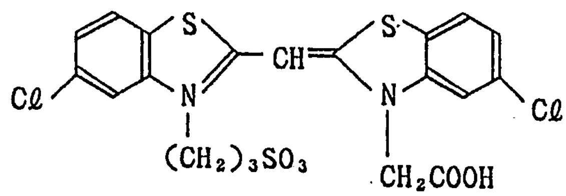 | 140 |
| Green-sensitive layer | 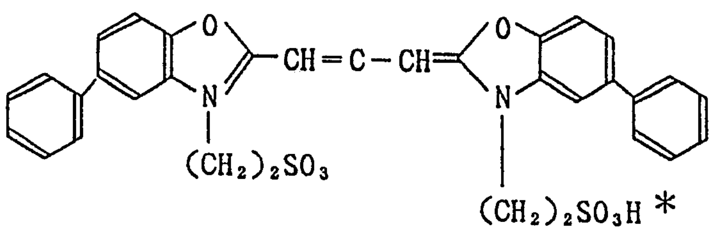 *· $N(C_2H_5)_3$ | 115 |
| Red-sensitive layer | 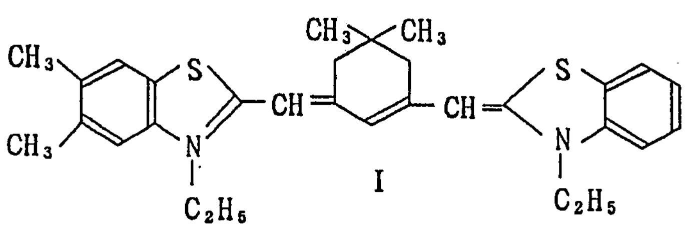 I | 21 |

Based on the above layer constitution, the dye in the red-sensitive silver chlorobromide emulsion layer was varied to prepare the samples as shown in Table 4, and the evaluation was made on the following:

(1) Fog:

Unexposed samples were processed following the processing steps shown below, and cyan density was measured using a densitometer Gretarc D-122 Type.

Processing steps

| | | |
|---|---|---|
| Color developing | 35°C | 45 seconds |
| Bleach Fixing | 35°C | 45 seconds |
| Washing | 30 to 35°C | 90 seconds |
| Drying | 60 to 68°C | 60 seconds |

The color developing solution and bleach-fixing solution used had the following composition. (per liter)

Color developing solution

| | |
|---|---|
| Pure water | 800 mℓ |
| Triethanolamine | 12 mℓ |
| N,N-diethylhydroxylamine (an aqueous 85 % solution) | 12 mℓ |
| Potassium chloride | 2.2 g |
| Potassium sulfite | 0.2 g |
| N-ethyl-N-β-methanesulfonamidoethyl-3-methyl-4-aminoaniline sulfate | 5.0 g |
| 1-Hydroxyethylidene-1,1-diphosphonic acid | 1 g |

| | |
|---|---|
| Ethylenediaminetetraacetic acid | 2 g |
| Diaminostilbene water-soluble brightening agent | 2 g |

Made up to 1 liter by adding pure water, and adjusted to pH 10.1.

<u>Bleach-fixing solution</u>

| | |
|---|---|
| Pure water | 800 mℓ |
| Ferric ammonium ethylenediaminetetraacetate | 65 g |
| Disodium ethylenediaminetetraacetate | 5 g |
| Ammonium thiosulfate | 85 g |
| Sodium hydrogensulfite | 10 g |
| Sodium metabisulfite | 2 g |
| Sodium chloride | 10 g |
| N,N-diethylhydroxylamine (an aqueous 85 % solution) | 2 mℓ |

Made up to 1 liter by adding pure water, and adjusted to pH 6.5 with diluted sulfuric acid.

(2) Aftercolor stain:

To examine the degree of color stain ascribable to the aftercolor of the dye after the development processing, a solution not using N-ethyl-N-β-methanesulfonamidoethyl-3-methyl-4-aminoaniline sulfate in the color developing solution in the above (1) was prepared, and the same processing as the above (1) was carried out, followed by measurement of cyan density in the same manner as the above (1).

Results are shown together in Table 4.

Table 4

| Sample No. | Amount of dye added in red-sensitive emulsion layer (mg/100 square·cm) | | Reflection density at unexposed area (1) Fog | (2) Stain |
|---|---|---|---|---|
| 20 (C) | – | | 0.003 | 0 |
| 21 (Y) | Exemplary compound (9) | 0.08 | 0.004 | 0.002 |
| 22 (") | " (13) | 0.08 | 0.005 | 0.003 |
| 23 (") | " (14) | 0.08 | 0.005 | 0.004 |
| 24 (") | " (18) | 0.08 | 0.004 | 0.003 |
| 25 (") | " (19) | 0.08 | 0.004 | 0.002 |
| 26 (X) | Comparative dye (A) | 0.08 | 0.012 | 0.007 |
| 27 (") | " (D) | 0.08 | 0.009 | 0.005 |

C: Control

X: Comparative Example

Y: Present Invention

Comparative dye (D)

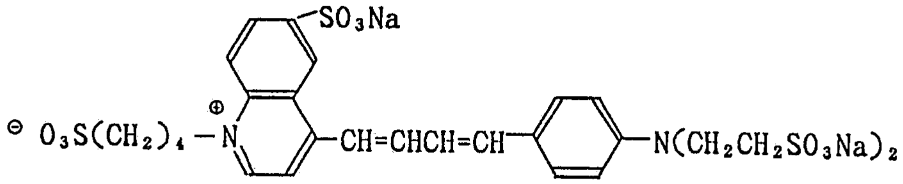

As the whiteness desirable for the color light-sensitive material used for printing, fog is required to be not more than 0.005. The samples of the present invention satisfy it as evident from Table 4. The color stain ascribable to the aftercolor of the dye, which is seen in the samples containing the comparative dyes, is also little seen in the samples of the present invention. In other words, the dyes according to the present invention were found to have only a very little ill influence to emulsions.

Example 3

(A) Preparation of emulsion:

In 1 ℓ of a solution containing 130 g of KBr, 2.5 g of KI, 30 mg of 1-phenyl-5-mercaptotetrazole and 15 g of gelatin, which was stirred at 40°C, 500 mℓ of a solution containing 0.5 mol of ammoniacal silver nitrate was added in 1 minute, and, after the addition, acetic acid was added in 2 minutes to adjust the pH to 6.0. After further 1 minute, 500 mℓ of a solution containing 0.5 mol of silver nitrate was added in 1 minute. After the resulting emulsion was stirred for 15 minutes, a formalin condensate of sodium naphthalenesulfonate and an aqueous solution of magnesium sulfate were added to make the emulsion coagulate. After the supernatant was removed, 2 ℓ of hot water of 40°C was added, and then stirring was carried out

for 10 minutes. Thereafter an aqueous solution of magnesium sulfate was again added to make the emulsion coagulate, and, after the supernatant was removed, 300 mℓ of a 5 % gelatin solution was added, followed by stirring at 55°C for 30 minutes. Thus a comparative emulsion was prepared.

This emulsion comprised grains with an average grain size of 0.40 µm, and 90 % of the whole grain number thereof was included in the range of from 0.20 µm and 0.70 µm. In this emulsion, 20.0 mg of ammonium thiocyanate, 5.0 mg of chloroauric acid and 15.0 mg of sodium thiosulfate (pentahydrate), per mol of silver halide, was added. At 52°C, after the above sensitizers were added, the sensitizing dye as shown in Table 5 was added in 90 minutes, followed by addition of 1.5 g of of 4-hydroxy-6-methyl-1,3,3a,7-tetrazaindene in 100 minutes, thus carrying out chemical ripening. The resulting emulsion was cooled to set.

(B) Preparation of samples:

First, to provide a backing layer, prepared was a backing layer solution comprising 400 g of gelatin, 2 g of polymethyl methacrylate, 6 g of sodium dodecylbenzenesulfonate, 20 g of the following anti-halation dye, and N,N'-ethylenebis-(vinylsulfonylacetamide), as well as sodium polyethylene

sulfonate. This solution was applied on one side of a polyethylene terephthalate base coated as a subbing solution with a copolymer aqueous dispersion obtained by effecting dilution so as to give a 10 wt.% of a copolymer of three kinds of monomers of 50 wt.% of glycidyl methacrylate, 10 wt.% of methyl acrylate and 40 wt.% of butyl methacrylate. The solution was applied together with a protective layer solution comprising gelatin, a matting agent (polymethyl methacrylate: 3.5 μm in average particle diameter), glyoxal, sodium t-octylphenoxyethoxyethane-sulfonate, and

· 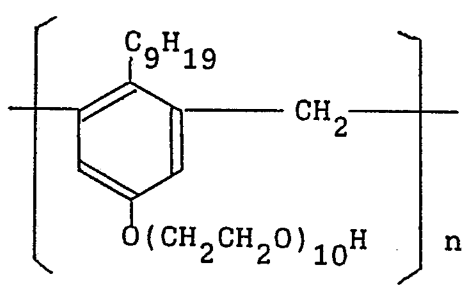

A mixture of n = 2 to 5

· $C_8F_{17}SO_2N(C_3H_7)CH_2COOK$

· $C_8F_{17}SO_2N(C_3H_7)(CH_2CH_2O\text{-})_{15}H$.

A support having been applied with backing treatment was thus prepared. The backing layer and protective layer each had a coating weight of 2.5 g/$m^2$ and 2.0 g/$m^2$, respectively, in terms of the weight of gelatin.

Anti-halation dye:

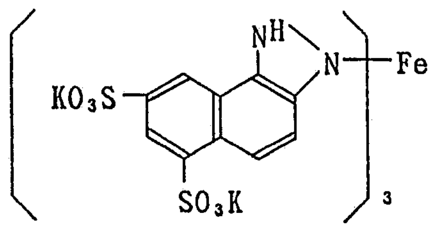

Next, in the above emulsion having been subjected to chemical ripening, 10 g of trimethylol propane, 50 mg of nitrophenyl-triphenylphosphonium chloride, 1 g of ammonium 1,3-dihydroxybenzene-4-sulfonate, 10 mg of sodium 2-mercaptobenzimidazole-5-sulfonate,

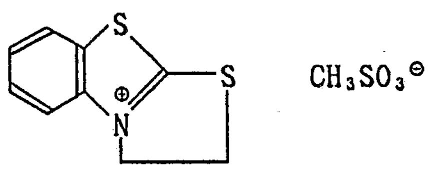

35 mg,

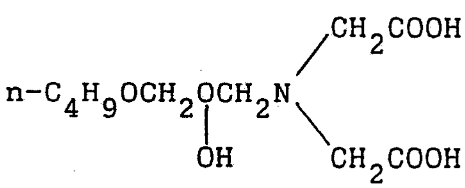

1 g,

1,1-dimethylol-1-bromo-1-nitromethane 10 mg,

and

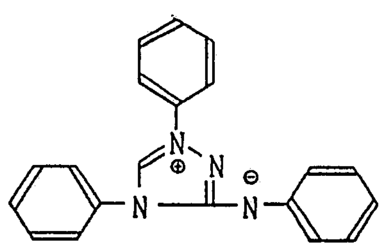

100 mg

were added, thus providing an emulsion layer.

The protective layer solution was prepared in the following manner.

Protective layer solution:

Its composition is shown below. The amount for addition is indicated by an amount per liter of the coating solution.

| | |
|---|---|
| Lime-treated inert gelatin | 68 g |
| Acid-treated gelatin | 2 g |
| $CH_2COOC_{10}H_{21}$ (coating aid)<br>$NaO_3S-CH-COOC_5H_{11}$ | 1 g |
| Polymethyl methacrylate, a matting agent with an area average particle diameter of 3.5 µm | 1.1 g |
| Silicon dioxide particles, a matting agent with an area average particle diameter of 1.2 µm | 0.5 g |
| Ludox AM (available from DuPont Co.) (colloidal silica) | 30 g |
| Aqueous 2 % solution of sodium salt of 2,4-dichloro-6-hydroxy-1,3,5-triazine (a hardening agent) | 10 mℓ |
| Formalin 35 % (a hardening agent) | 2 mℓ |
| Aqueous 40 % solution of glyoxal (a hardening agent) | 1.5 mℓ |
| 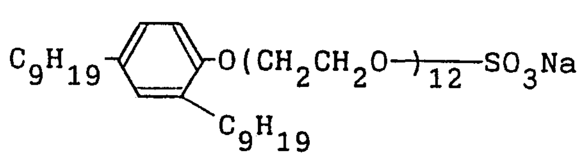 | 1.0 g |

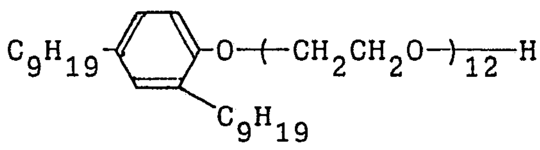

0.4 g

$CH_2COO(CH_2)_9CH_3$
|
$CHCOO(CH_2)_2CH(CH_3)_2$
|
$SO_3Na$ 0.3 g

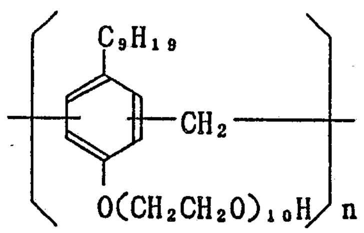

2.5 g

(A mixture of n = 2 to 5)

$NaO_3S-CH-COOCH_2(C_2F_4)_3H$
|
$CH_2COOCH_2(C_2F_4)_3H$ 0.5 g

$F_{19}C_9-O-(-CH_2CH_2O-)_{10}-CH_2CH_2-OH$ 3 mg

$C_4F_9SO_3K$ 2 mg

The above base having been applied with backing treatment was coated with each layer solution by a slide hopper process so that a silver halide emulsion layer and a protective layer are provided in layers in this order from the support side, two layers of which were simultaneously provided at a coating speed of 60 m/min,

thus obtaining samples. Each sample had a silver weight of 2.5 $g/m^2$, and a gelatin weight of 3 $g/m^2$ for the emulsion layer and 1.3 $g/m^2$ for the protective layer.

The resulting coated samples were stored at 23°C under 55 % RH for 3 days to make stable the hardening, and then exposed to light in 1/100,000 second per one picture element (100 $\mu m^2$) using a semiconductor laser with a light emission of 800 nm, varying the intensity of irradiation. Subsequently, using an X-ray automatic processing machine (trade name: Konica X-Ray Automatic Processing Machine SRX-501) manufactured by Konica Corporation, processing was carried out at 35°C for 45 seconds. The processing solutions used were a developing solution (trade name: Konica XD-SR) and a fixing solution (trade name: Konica XF-SR), for use in X-ray automatic processing machine, manufactured by Konica Corporation.

Fog and speed were evaluated on each sample after development. The speed was determined in terms of a common logarithm of a reciprocal of the amount of exposure necessary for giving the density of "fog + 1.0", and indicated by a relative value assuming the speed of Sample No. 1 as 100. Results obtained are shown in Table 5.

Table 5

| Sample | Sensitizing dye and its amount* (mg) | | Cyanine dye of the invention and its amount* (mg) | | Photographic performance | | Remarks |
|---|---|---|---|---|---|---|---|
| | | | | | Fog | Speed | |
| 1 | a) | 10 | | - | 0.03 | 100 | X |
| 2 | a) | 50 | | - | 0.03 | 110 | X |
| 3 | a) | 100 | | - | 0.05 | 90 | X |
| 4 | a) | 10 | (15) | 10 | 0.03 | 114 | Y |
| 5 | a) | 10 | (15) | 20 | 0.03 | 118 | Y |
| 6 | a) | 10 | (15) | 40 | 0.05 | 126 | Y |
| 7 | a) | 10 | (15) | 90 | 0.03 | 145 | Y |
| 8 | a) | 50 | (15) | 50 | 0.03 | 141 | Y |
| 9 | a) | 100 | (15) | 50 | 0.05 | 140 | Y |
| 10 | a) | 100 | (15) | 100 | 0.05 | 152 | Y |

X: Comparative Example, Y: Present Invention

* The amount for the addition refers to the amount per mol of silver halide.

Sensitizing dye:

a)

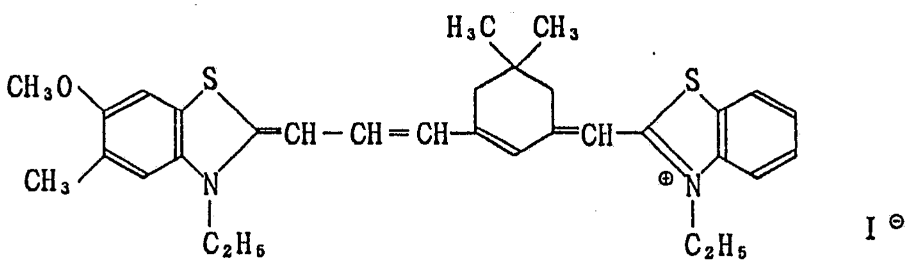

## POSSIBILITY OF INDUSTRIAL UTILIZATION

As described above, the dye in the light-sensitive silver halide photographic material of the present invention is useful as a dye for use in photography and a spectral sensitizing dye. At the same time, it is desirably capable of being dissolved away and decolored in the course of development processing, causes only a very little aftercolor stain after processing, and has only a very small influence to photographic emulsions.

CLAIMS

A light-sensitive silver halide photographic material, comprising a support having thereon a hydrophilic colloid layer containing at least one of a cyanine dye represented by the following Formula (I).

Formula (I)

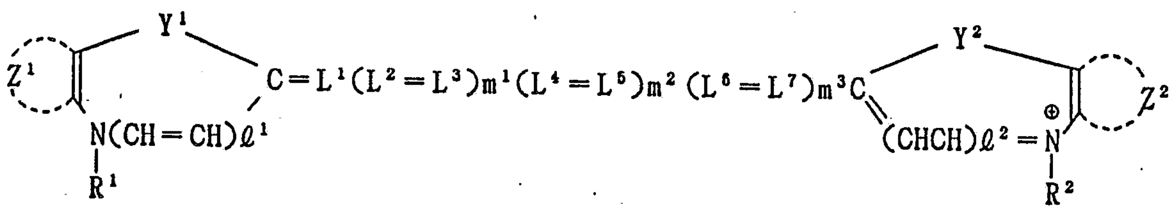

wherein $Y^1$ and $Y^2$ each represent a chalcogen atom, a -CH=CH- group or a >N-$R^3$ group; $Z^1$ and $Z^2$ each represent a group of non-metallic atoms necessary to complete a condensed benzene ring or condensed naphthalene ring directly substituted with at least one sulfo group; $R^1$ and $R^2$ each represent a hydrocarbon group substituted with an acidic group; $R^3$ represents an alkyl group or an aryl group; $L^1$, $L^2$, $L^3$, $L^4$, $L^5$, $L^6$ and $L^7$ each represent a methine group; and $\ell^1$, $\ell^2$, $m^1$, $m^2$ and $m^3$ each represent 0 or 1.

2. The light-sensitive silver halide photographic

material according to Claim 1, wherein said hydrophilic colloid comprises gelatin.

3. The light-sensitive silver halide photographic material according to Claim 1 or 2, wherein said hydrophilic colloid layer comprises a light-sensitive layer containing a light-sensitive silver halide.

4. The light-sensitive silver halide photographic material according to Claim 1 or 2, wherein said hydrophilic colloid layer comprises a non-light-sensitive layer.

5. The light-sensitive silver halide photographic material according to Claim 1, 2, 3 or 4, wherein said chalcogen atom comprises an atom selected from the group consisting of oxygen, sulfur, selenium and tellurium.

6. The light-sensitive silver halide photographic material according to Claim 4, wherein said non-light-sensitive layer comprises a layer contiguous to a support.

7. The light-sensitive silver halide photographic material according to Claim 4, wherein said non-light-sensitive layer comprises a layer contiguous to two light-sensitive silver halide emulsion layers.

8. The light-sensitive silver halide photographic material according to Claim 3, wherein said light-sensitive silver halide is spectrally sensitized with said cyanine dye.

9. The light-sensitive silver halide photographic material according to Claim 4, wherein said non-light-sensitive layer comprises a backing layer.

10. The light-sensitive silver halide photographic material according to Claim 4 or 9, wherein said non-light-sensitive layer comprises an anti-halation layer.

11. The light-sensitive silver halide photographic material according to Claim 4, wherein said non-light-sensitive layer comprises a filter dye layer.

12. The light-sensitive silver halide photographic material according to Claim 3, wherein said cyanine dye is used as an anti-irradiation dye.

# INTERNATIONAL SEARCH REPORT

International Application No PCT/JP 88/01216

**I. CLASSIFICATION OF SUBJECT MATTER** (if several classification symbols apply, indicate all) [6]

According to International Patent Classification (IPC) or to both National Classification and IPC

Int. $Cl^4$ G03C1/84, G03C1/14

**II. FIELDS SEARCHED**

Minimum Documentation Searched [7]

| Classification System | Classification Symbols |
|---|---|
| IPC | G03C1/84, G03C1/14, G03C7/26 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| P | JP, A, 63-138341 (Fuji Photo Film Co., Ltd.) 10 June 1988 (10. 06. 88) & EP, A, 270079 | 1 - 12 |
| P | JP, A, 63-138342 (Fuji Photo Film Co., Ltd.) 10 June 1988 (10. 06. 88) & EP, A, 270082 | 1 - 12 |
| P | JP, A, 63-197934 (Fuji Photo Film Co., Ltd.) 16 August 1988 (16. 08. 88) & EP, A, 278510 | 1 - 12 |
| P | JP, A, 63-197935 (Fuji Photo Film Co., Ltd.) 16 August 1988 (16. 08. 88) & EP, A, 278510 | 1 - 12 |
| E | JP, A, 64-3639 (Fuji Photo Film Co., Ltd.) 9 January 1989 (09. 01. 89) (Family: none) | 1, 2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| February 27, 1989 (27. 02. 89) | February 20, 1989 (20. 02. 89) |
| **International Searching Authority** | **Signature of Authorized Officer** |
| Japanese Patent Office | |